# EUROPÄISCHE PATENTSCHRIFT

(11) **EP 0 362 678 B1**
(45) Veröffentlichungstag und Bekanntmachung des Hinweises auf die Patenterteilung: **21.07.1993**
(21) Anmeldenummer: 89117797.4
(22) Anmeldetag: 27.09.1989
(51) Int. Cl.: B60K 17/00, F16D 23/00

(54) **Zugfahrzeugachse**
Axle for traction vehicles
Essieu pour véhicules tracteurs

(30) Priorität: 05.10.1988 DE 3833863
(43) Veröffentlichungstag der Anmeldung: 11.04.1990
(73) Patentinhaber: Xaver Fendt GmbH & Co., D-87609 Marktoberdorf (DE); Sige Brevetti Ing. Colombo S.p.A., Vimercate Colombo (IT)
(72) Erfinder: Pirotta, Santino, I-20069 Vaprio d'Adda (Mi) (IT); Honzek, Robert, D-8957 Oberthingau (DE); Dziuba, Peter, D-8951 Lengenwang (DE)

(56) Entgegenhaltungen:
- EP-A- 0 218 903
- WO-A-85/01998
- DE-A- 1 430 849
- DE-A- 3 409 100
- DE-C- 3 401 224
- US-A- 4 305 490

## Beschreibung

Die Erfindung betrifft eine Zugfahrzeugachse mit vom Schalt- bzw. Verteilergetriebe des Fahrzeuges über einen Antriebsstrang antreibbaren Rädern, die von Radnaben getragen sind, in denen sich eine Einrichtung zum radnahen Unterbrechen und Herstellen des bei abgeschaltetem Radantrieb vom Boden ausgehenden Antriebes des ein Reduktionsgetriebe enthaltenden Antriebstranges befindet, wobei die Einrichtung ein erstes, mit dem Antriebsstrang drehendes Kupplungsorgan mit einer Mitnehmerverzahnung aufweist, die durch axiales Verschieben des ersten Kupplungsorgangs in drehfesten Eingriff mit der Mitnehmerverzahnung eines zweiten, mit der Radnabe drehenden Kupplungsorgans bringbar ist, sobald Synchronlauf der Kupplungsorgane gegeben ist, und zur Erzielung des Synchronlaufs ein mit dem ersten Kupplungsorgan umlaufender erster Synchronisierungsring gegen einen mit dem zweiten Kupplungsorgan umlaufenden zweiten Synchronisierungsring gedrückt wird.

Eine Fahrzeugachse dieser Art, allerdings ohne ein Reduktionsgetriebe im Antriebsstrang, ist aus der US-A 4 305 490 bekannt. Die hier zur Erzielung des Synchronlaufes der beiden Kupplungsorgane benutzten Synchronisierungsringe erfüllen diese primäre Aufgabe zwar bestimmungsgemäß. Es ist aber keine Gewähr dafür gegeben, daß bei erreichtem Synchronlauf die beiden Kupplungsorgane einander Zahn auf Lücke gegenüberstehen. Vielmehr werden sich bei der überwiegenden Anzahl aller Schaltvorgänge nach erreichtem Synchronlauf die Zähne der Kupplungsorgane mehr oder weniger überdecken. Für einen Kämmeingriff der Kupplungsorgane ist es daher erforderlich, das antriebsstrangseitige Kupplungsorgan gegenüber dem nabenseitigen Kupplungsorgan soweit zu verdrehen, bis die zum Kuppeln notwendige Zahn- Lücke-Stellung erreicht ist. Um diesen Effekt zu erzielen sind die einander zugewandten Endbereiche der Verzahnungen der Kupplungsorgane stark abgerundet, wodurch die Zahnlücken eine trichterförmige Erweiterung erfahren. Aufgrund dieser Maßnahme lassen sich die Kupplungsorgane zwar in der überwiegenden Anzahl aller Schaltvorgänge in Eingriff bringen, jedoch kann nicht ausgeschlossen werden, daß die Kupplungsorgane auch in einer Relativstellung zur Ruhe kommen können, in der ihre Zähne sich genau gegenüberstehen. In diesem Fall ist der Fahrer des Fahrzeuges gezwungen, die Einrückkraft kurzzeitig zu vermindern, damit die Kupplungsorgane eine andere Relativstellung zueinander einnehmen können, und dann den Einrückvorgang erneut zu starten. Bei manuell betätigter Einrückung ist dies nicht von erheblichem Gewicht, da der Fahrer sofort über den nicht gelungenen Einrückvorgang informiert wird. Anders ist es, wenn die angetriebenen Vorderräder des Fahrzeuges eine größere Umfangsgeschwindigkeit als die Hinterräder aufweisen (Vorlauf) und das Einrücken, wie bei der bekannten Einrichtung, mittels Hilfskraft erfolgt. In diesem Fall können die Verzahnungen beschädigt werden, wenn nach einem nicht erkannten nicht gelungenen Einrückvorgang der Antriebsstrang getriebeseitig in den Kraftfluß gelegt wird, ohne daß die Kupplungsorgane vollständig miteinander gekuppelt sind.

Erschwerend kommt bei Zugfahrzeugachsen mit einem im Antriebsstrang enthaltenen Reduktionsgetriebe hinzu, daß durch das Reduktionsgetriebe bedingt, die zu synchronisierenden Massen erheblich größer sind als die bei der bekannten Einrichtung, die Synchronisierungseinrichtung selbst aus Platz- und Kostengründen aber nicht entsprechend vergrößert werden kann. In solchen Fällen muß damit gerechnet werden, daß die Verzahnungen der Kupplungsorgane bereits aufeinander treffen, wenn die Kupplungsorgane noch nicht vollständig synchron laufen. Daraus erwächst eine Beschädigungsgefahr für die Verzahnungen der Kupplungsorgane, die umso größer ist, je stärker die Zähne im einander zugewandten Bereich abgerundet sind.

Hiervon ausgehend wird die Aufgabe der Erfindung darin gesehen, eine Zugfahrzeugachse der im Oberbegriff des Anspruches 1 beschriebenen Art zur Verfügung zu stellen, die in Zusammenhang mit dem Herstellen der Antriebsverbindung zu den zugehörigen Rädern während der Fahrt zuverlässig arbeitet und wenig beschädigungsanfällig ist.

Gelöst ist diese Aufgabe durch die im Kennzeichen des Anspruches 1 beschriebene Erfindung.

Durch das erfindungsgemäße Stillsetzen der Kupplungsorgane in den definierten Relativstellungen und den damit erzielbaren problemlosen Kämmeingriff der Mitnehmerverzahnungen ist für diese jegliche Gefahr beseitigt, miteinander in Kontakt zu kommen, solange die Kupplungsorgane noch mit unterschiedlichen Drehzahlen rotieren. Die Notwendigkeit, die Mitnehmerverzahnungen durch Abrunden oder Anspitzen zu schwächen, entfällt damit. Auf der anderen Seite besteht auch für die Klauenverzahnungen der Synchronisierungsringe keine Beschädigungsgefahr, da diese erst dann miteinander in Eingriff gelangen können, wenn die Relativdrehzahl der Synchronisierungsringe auf einen sehr geringen Wert abgefallen ist. Bei höheren Differenzdrehzahlen gleiten die einander zugewandten Stirnseiten der Klauenverzahnungen unter gegenseitiger Abweisung aufeinander.

Andere die Erfindung weiterbildende Maßnahmen sind in den Unteransprüchen beschrieben.

Die Erfindung wird im folgenden anhand einer Teilschnittansicht durch die Radnabe einer antreibbaren Lenkachse näher erläutert.

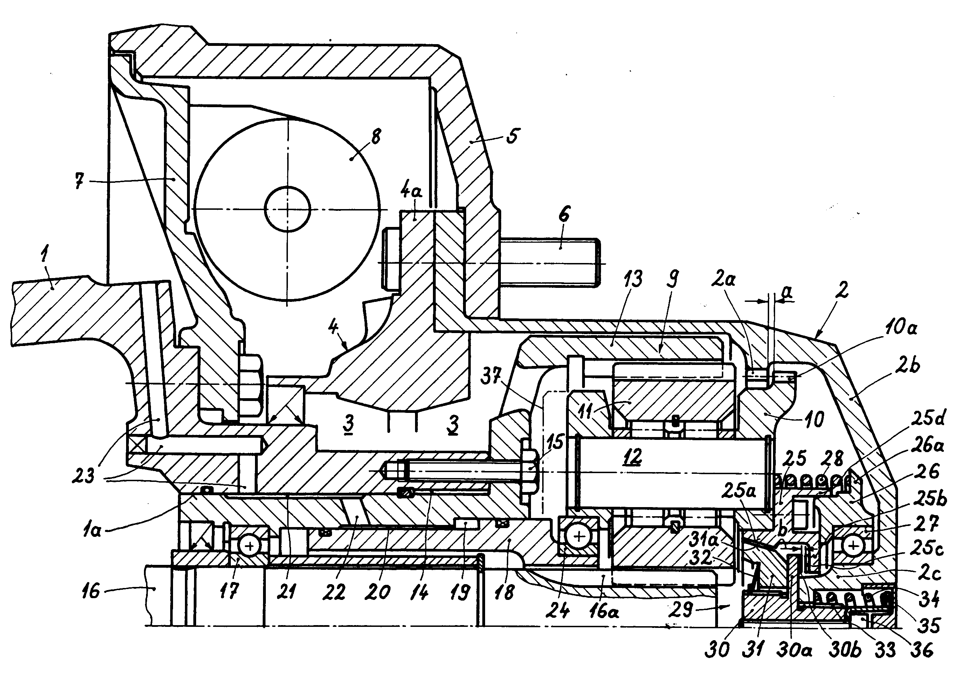

Die Zeichnung beschränkt sich auf die Wiedergabe lediglich des Endbereiches einer angetriebenen starren Lenkachse, nämlich des über einen nicht dargestellten Achsschenkelbolzen mit dem Achskörper gelenkig verbundenen Achsschenkels 1, auf dem eine Radnabe 2 drehbar gelagert ist. Im freien Endbereich des Achsschenkels 1 sind im Abstand voneinander zwei Kegelrollenlager 3 für einen Radnabenträger 4 angeordnet. An einem Flansch 4a desselben ist die Radnabe 2 sowie die eine Bremstrommel 5 mit Befestigungsschrauben 6 für das nicht gezeigte Vorderrad angeflanscht. Die Bremstrommel 5 erstreckt sich annähernd bis in den Bereich des Achsschenkelbolzens wo sie stirnseitig durch einen an einem Ansatz des Achsschenkels 1 abgestützten Bremsschild 7 angeschlossen ist. Im Innern der Bremstrommel 5 ist am Bremsschild 7 die Radbremse befestigt, von der in der Zeichnung lediglich der Bremszylinder mit 8 angedeutet ist.

Innerhalb der Radnabe 2 ist ein Reduktionsgetriebe 9 untergebracht, das die Aufgabe hat, die hohe Antriebsdrehzahl des von einem nicht gezeigten Verteilergetriebe ausgehenden Antriebsstranges auf die wesentlich niedrigere Raddrehzahl zu reduzieren. Das Reduktionsgetriebe 9 weist einen ringförmigen Planetenradträger 10 auf, in dessen Ringkörper mehrere gleichmäßig über den Umfang verteilte Planetenräder 11 auf Tragbolzen 12 drehbar gelagert sind. Die Planetenräder 11 ragen auf der Außenseite aus der zylindrischen Oberfläche des Planetenradträgers 10 hinaus und greifen dort mit ihrer Verzahnung in ein Hohlrad 13 ein, das in eine mittige Bohrung 1a des Achsschenkels 1 mittels einer Keilverzahnung 14 undrehbar eingesetzt und mit Schrauben 15 befestigt ist. Auf der Innenseite des Planetenradträgers 10 greifen die Planetenräder 11 in die Verzahnung eines Sonnenritzels 16a ein, das den Endbereich einer Gelenkwelle 16 bildet, die durch die axiale Bohrung 1a durch den Achskörper herangeführt ist. Gelagert ist die Gelenkwelle 16 im achskörperseitigen Endbereich des Achsschenkels 1 durch ein Kugellager 17.

In einer axialen Bohrung des Hohlrades 13 ist ferner ein Kolben 18 verschiebbar geführt, dessen ringförmiger Kolbenraum 19 über Ringspalte 20,21 und Bohrungen 22,23 im Hohlrad 13 und im Achsschenkel 1 von der Hydraulikanlage des Ackerschleppers beaufschlagbar ist. Im aus dem Hohlrad 13 herausragenden Endbereich ist auf dem Kolben 18 über ein Kugellager 24 der Planetenradträger 10 drehfest gelagert, so daß er mit dem Kolben 18 verschiebbar ist. Der aus dem Hohlrad 13 herausgreifende Bereich des Planetenradträgers 10 ist an seinem äußeren Umfang mit einer Mitnehmerverzahnung 10a versehen, die sich in der gezeigten rechten, durch Beaufschlagung des Kolbens 18 mit Druckmittel eingenommenen Kolbenlage in einem bestimmten freien Abstand a zu einer Mitnehmerverzahnung 2a an der Radnabe 2 befindet. In der linken, in nicht druckbeaufschlagtem Zustand eingenommenen Endlage des Kolbens 18 greift die Mitnehmerverzahnung 10a vollständig in die Mitnehmerverzahnung 2a ein, wodurch eine drehfeste Verbindung zwischen dem Reduktionsgetriebe 9 und der Radnabe 2 gegeben ist.

Damit die Mitnehmerverzahnungen 2a, 10a während der Fahrt des Ackerschleppers ohne jegliche Geräuschbildung in Eingriff gebracht werden können, ist im Bereich zwischen der Stirnwand 2b der Radnabe 2 und dem Reduktionsgetriebe 9 eine Synchronisierungsvorrichtung angeordnet. Diese hat nicht nur die Aufgabe, in bekannter Weise die Drehzahl des zunächst stillstehenden Planetenradträgers 10 an die der Radnabe 2 anzupassen, sondern soll außerdem sicherstellen, daß der Planetenradträger 10 im Moment der vollständigen Drehzahlangleichung eine Position einnimmt, in der seine Mitnehmerverzahnung 10a mit der der Radnabe 2 auf Lücke gegenübersteht, was das anschließende Ineingriffbringen dieser beiden Mitnehmerverzahnungen 2a,10a völlig problemlos macht. Hierzu ist am Planetenradträger 10 ein Synchronisierungsring 25 mit einer kegelförmigen Synchronisierungsfläche 25a sowie einem Kragen 25b befestigt der auf einer dem Reduktionsgetriebe 9 zugewandten Seite eine Klauenverzahnung 25c trägt und sich bei druckbeaufschlagtem Kolben 18 auf der gegenüberliegenden Seite an einem Abstützring 26 abstützt, der über ein Kugellager 27 an der Stirnwand 2b gelagert ist. Eine axiale Führung des Synchronisierungsringes 25 am Abstützring 26 erfolgt in dieser Phase über einen trommelförmigen Bereich 25d. Zwischen einer Schulter 26a des Abstützringes 26 und der äußeren Stirnfläche des Planetenradträgers 10 befindet sich ferner eine Druckfeder 28, deren Aufgabe es ist, den Planetenradträger 10 mit seiner Mitnehmerverzahnung 10a in die linke Endstellung zu schieben, wenn der Kolben 18 unbeaufschlagt ist.

Mit dem Synchronisierungsring 25 wirkt ein zweiter Synchronisierungsring 29 zusammen, der zweiteilig ausgebildet ist und aus einem zentral zur Radnabe 2 angeordneten Schiebestück 30 sowie einem darauf drehfest angeordneten Ring 31 besteht. Dieser ist gegen die Kraft einer Tellerfeder 32 aus einer am Kragen 30a des Schiebestückes 30 anliegenden Stellung in Richtung des Reduktionsgetriebes 9 begrenzt verschiebbar. Seine Synchronisierungsfläche 31a ist zum Eingriff mit der des Synchronisierungsringes 25 wie diese konisch ausgebildet und mit einem Reibbelag versehen.

Der Kragen 30a des Schiebestückes 30 trägt eine Klauenverzahnung 30b, die der des Synchronisierungsringes 25 in einem etwas geringerem freien Abstand b gegenübersteht wie der freie Abstand a der Mitnehmerverzahnung 2a, 10a. Gleichzeitig liegt der Kragen 30a an einem sich mittig einwärts erstreckenden Ansatz 2c der Stirnwand 2b an. Beide Synchronisierungsringe 25, 29 befinden sich somit in ihrer äußeren Endstellung, aus der sie lediglich in Richtung auf das Reduktionsgetriebe 9 verschoben werden können.

Damit das Schiebestück 30 den Längsbewegungen des Synchronisierungsringes 25 und damit des Planetenradträgers 10 folgen kann, ist es mittels einer Keilverzahnung 33 im Ansatz 2c längsverschiebbar und drehfest geführt. Eine Bewegung in entgegengesetzter Richtung erfolgt unter der Kraft einer Druckfeder 34, die sich an der Radnabe 2 und einem ringförmigen Kragen 35 abstützt, welcher mittels einer Schraube 36 mit dem Schiebestück 30 verbunden ist. Die Kraft der Druckfeder 34 ist dabei gerade ausreichend, um den Synchronisierungsring 29 in seine gezeigte Lage zurückzuschieben. Da die Kraft der Druckfeder 34 beim Einrücken der Mitnehmerverzahnungen 2a, 10a mit überwunden werden muß, ist die Druckfeder 28 entsprechend kräftig ausgebildet.

In der Zeichnung ist die Lenkachse mit radnah unterbrochenem Antriebsstrang dargestellt. Der Kolben 18 ist druckbeaufschlagt und hat dem Planetenradträger 10 gegen die Kraft der Druckfeder 28 in seine rechte Endlage geschoben, in der die Mitnehmerverzahnungen 2a,10a außer Eingriff sind. Der gesamte Antriebsstrang einschließlich des Reduktionsgetriebes 9 befindet sich selbst bei sich bewegendem Fahrzeug im Stillstand. Soll die Lenkachse antreibend benutzt werden, so wird vor dem eigentlichen Zuschalten des Antriebsstranges im Verteilergetriebe die Druckbeaufschlagung des Kolbens 18 aufgehoben. Die Druckfeder 28 schiebt daraufhin den Planetenradträger 10 des Reduktionsgetriebes 9 um eine geringe Strecke zurück, bis die Synchronisierungsflächen der Synchronisierungsringe 25, 29 aufeinandertreffen, wobei jedoch zu diesem Zeitpunkt ihre Klauenverzahnungen 25c, 30b noch nicht Ineingriff kommen. Von dem mit der Radnabe 2 drehenden Synchronisierungsring 29 wird der Synchronisierungsring 25 und damit der Planetenradträger 10 und alle anderen Antriebselemente des Antriebsstranges allmählich mitgenommen, bis die Drehzahl des Planetenradträgers 10 annähernd der der Radnabe 2 entspricht. Die Relativgeschwindigkeit der Klauenverzahnungen 25c, 30b ist nun derart gering, daß sie unter dem weiterhin wirkenden Einfluß der Druckfeder 28 ohne Geräuschbildung in Eingriff kommen. Da sich im Moment des Klaueneingriffs auch die Mitnehmerverzahnungen 2a, 10a Zahn auf Lücke gegenüberstehen, ist die Druckfeder 28 im weiteren Verlauf in der Lage, den Planetenradträger 10 in seine mit 37 angedeutete linke Endstellung zu schieben, in der seine Mitnehmerverzahnung 10a mit der der Radnabe 2 Ineingriff steht. Bei diesem Vorgang wird das Schiebestück 30 über die konischen Synchronisierungsflächen und die Klauenverzahnungen mitgenommen und dabei die Druckfeder 34 gespannt. Anschließend kann im Verteilergetriebe der Antrieb des Antriebsstranges zugeschaltet werden.

Wird die treibende Funktion der Lenkachse nicht mehr benötigt, so genügt es, den Kolben 18 mit Druckmittel zu beaufschlagen, wodurch er sich gegen die Kraft der Druckfeder 28 gemeinsam mit dem Planetenradträger 10 wieder in die gezeigte Stellung verschiebt, in der die Antriebsverbindung über die Mitnehmerverzahnungen 2a,10a unterbrochen ist.

Obwohl die Synchronisierungseinrichtung im Einsatz nur mäßig belastet ist, kann diese Belastung noch weiter verringert werden, in dem unmittelbar vor dem Entlasten des Kolbens 18 kurzzeitig im Verteilergetriebe der Antrieb zum Rad eingeschaltet werden. Dadurch wird der Antriebsstrang derart beschleunigt, daß von der Synchronisierungseinrichtung nur noch eine praktisch vernachlässigbare Synchronisierungsarbeit zu verrichten ist.

## Patentansprüche

1. Zugfahrzeugachse mit vom Schalt- bzw. Verteilergetriebe des Fahrzeuges über einen Antriebsstrang antreibbaren Rädern, die von Radnaben (2) getragen sind, in denen sich eine Einrichtung zum radnahen Unterbrechen und Herstellen des bei abgeschaltetem Radantrieb vom Boden ausgehenden Antriebes des ein Reduktionsgetriebe (9) enthaltenden Antriebstranges befindet, wobei die Einrichtung ein erstes, mit dem Antriebsstrang drehendes Kupplungsorgan mit einer Mitnehmerverzahnung (10a) aufweist, die durch axiales Verschieben des ersten Kupplungsorgans in drehfesten Eingriff mit der Mitnehmerverzahnung (2a) eines zweiten, mit der Radnabe (2) drehenden Kupplungsorgans bringbar ist, sobald Synchronlauf der Kupplungsorgane gegeben ist, und zur Erzielung des Synchronlaufs ein mit dem ersten Kupplungsorgan umlaufender erster Synchronisierungsring (25) gegen einen mit dem zweiten Kupplungsorgan umlaufenden zweiten Synchronisierungsring (29) gedrückt wird,
**dadurch gekennzeichnet,**
daß der Synchronisierungsvorgang in vorgegebenen Relativstellungen der Synchronisierungsringe (25,29) zueinander, in denen sich die Mitnehmerverzahnung (10a) des ersten Kupplungsorgans, dem Planetenradträger (10) des Reduktionsgetriebes (9), und die Mitnehmerverzahnung (2a) des zweiten Kupplungsorgans, der Radnabe (2), Zahn auf Lücke gegenüberstehen, beendet wird, wozu
a) der Synchronisierungsring (25) mit einer Klauenverzahnung (25c) versehen ist,
b) der Synchronisierungsring (29) aus einem drehfest aber verschiebbar an der Radnabe (2) gelagerten Schiebestück (30), das mit einer mit der Klauenverzahnung (25c) zusammenwirkenden Klauenverzahnung (30b) versehenen ist, und einem darauf drehfest gelagerten, jedoch gegen die Kraft einer Feder (32) begrenzt in Einrückrichtung des ersten Kupplungsorgans verschiebbaren Ring (31) besteht und
c) der freie Abstand (b) der Klauenverzahnungen (25c,30b) geringer ist als der freie Abstand (a) der Mitnehmerverzahnungen (2a,10a).

2. Achse nach Anspruch 1,
**dadurch gekennzeichnet,**
daß das Schiebestück (30) gegen die Kraft einer Feder (34) verschiebbar ist, die schwächer ist als die Feder (28).

3. Achse nach den Ansprüchen 1 und 2,
**dadurch gekennzeichnet,**
daß die Mitnehmerverzahnung (10a) des Planetenradträgers (10) durch die Kraft der Feder (28) in Eingriff mit der Mitnehmerverzahnung (2a) der Radnabe (2) bringbar ist.

4. Achse nach Anspruch 1,
**dadurch gekennzeichnet,**
daß unmittelbar vor der Ansteuerung des Kolbens (18) im Sinne eines Ineingriffbringens der Mitnehmerverzahnungen (2a,10a) im Schalt- bzw. Verteilergetriebe der Antrieb des aus einer Gelenkwelle (16) einem Reduktionsgetriebe (9) bestehenden Antriebsstranges kurzzeitig zuschaltbar ist.

## Claims

1. A tractor vehicle axle with wheels which can be driven by the gearbox or transfer gearbox of the vehicle via a drive train, the wheels being supported by wheel hubs (2) in which a device is located for interrupting and connecting, in the vicinity of the wheel, the drive from the drive train containing a reducing gear (9), the drive coming from the ground when the wheel drive is disconnected, wherein the device has a first coupling element rotating with the drive train, with a toothed driving section (10a) which can be brought into rotationally fixed engagement with the toothed driving section (2a) of a second coupling element which rotates with the wheel hub (2) as soon as synchronous running of the coupling elements is achieved, and wherein a first synchronisation ring (25), which rotates with the first coupling element, is pressed against a second synchronisation ring (29) rotating with the second coupling element, characterised in that the synchronisation operation is ended at predetermined relative positions of the synchronisation rings (25, 29) with respect to each other, in which the toothed driving section (10a) of the first coupling element is opposite the planet carrier (10) of the reducing gear (9), and the toothed driving section (2a) of the second coupling element is opposite the wheel hub (2), with the teeth engaging in gaps in each case, for which purpose
a) the synchronisation ring (25) is provided with a claw tooth section (25c),
b) the synchronisation ring (29) consists of a sliding piece (30), which is mounted rotationally fixed but moveable on the wheel hub (2) and which is provided with a claw toothed section (30b) cooperating with the claw toothed section (25c), and of a ring (31) mounted rotationally fixed thereon, but restrictedly movable against the force of a spring (32) in the direction of engagement of the first coupling element, and
c) the free space (b) between the claw toothed sections (25c, 30b) is less than the free space (a) between the toothed driving sections (2a, 10a).

2. An axle according to claim 1, characterised in that the sliding piece (30) is moveable against the force of a spring (34) which is weaker than the spring (28).

3. An axle according to claims 1 and 2, characterised in that the toothed driving section (10a) of the planet carrier (10) can be brought into engagement with the toothed driving section (2a) of the wheel hub (2) by the force of the spring (28).

4. An axle according to claim 1, characterised in that immediately before the piston (18) is actuated in the sense of bringing the toothed driving sections (2a, 10a) into engagement in the gearbox or transfer gearbox, the drive from the drive train, which consists of a universal-jointed shaft (16) to a reducing gear (9) can be momentarily connected.

## Revendications

1. Essieu de tracteur comprenant des roues susceptibles d'être entraînées par une transmission ou une boîte de vitesses par l'intermédiaire d'un moteur, roues portées par un moyeu dans lequel se trouve un dispositif pour débrancher le moyeu attenant et établir l'entraînement par le sol par l'entraînement des roues débrayées de la transmission contenant le réducteur de vitesse, ce dispositif comportant un premier organe d'accouplement tournant avec la transmission et muni d'une denture d'entraînement (10a) qui, par déplacement axial du premier organe d'accouplement, vient en prise sans glissement avec une denture d'entraînement (2a) d'un second organe d'accouplement tournant avec le moyeu (2) de roue lorsque la synchronisation des organes d'accouplement est établie, cette synchronisation étant obtenue par la mise en pression d'une première bague de synchronisation (25) tournant avec le premier organe d'accouplement sur une seconde bague de synchronisation (29) tournant avec le second organe d'accouplement, caractérisé en ce que l'opération de synchronisation se trouve achevée lorsque les bagues de synchronisation (25, 29) ont des positions relatives telles que la denture d'entraînement (10a) du premier organe d'accouplement, appartenant au support de planétaires (10) du réducteur (9) d'une part, la denture d'entraînement (2a) du second organe d'accouplement, appartenant au moyeu de roue (2) d'autre part, se trouvent accordées, c'est-à-dire dent face à entredent, et à cette fin
a) l'anneau de synchronisation (25) est équipé d'une denture à crabots (25c)
b) l'anneau de synchronisation (29) est constitué d'une part, d'un coulisseau (30) qui peut se déplacer sans tourner sur le moyeu de roue (2) et qui porte une denture à crabots (30b) coopérant avec la dentures à crabots (25c), d'autre part d'un anneau (31) pouvant se déplacer sans tourner sur le coulisseau précédent, contre l'action d'un ressort, avec une course limitée dans le sens d'embrayage du premier organe d'accouplement
c) l'intervalle (b) séparant les dentures à crabots (25c, 30b) est inférieur à l'intervalle (a) séparant les dentures d'entraînement.

2. Essieu selon la revendication 1, caractérisé en ce que le coulisseau (30) peut se déplacer contre l'action d'un ressort (34) plus faible que le ressort (28).

3. Essieu selon les revendications 1 et 2, caractérisé en ce que la denture d'entraînement (10a) du support de planétaires (10) peut être amenée en prise avec la denture d'entraînement (2a) du moyeu de roue (2), contre l'action du ressort (28).

4. Essieu selon la revendication 1, caractérisé en ce qu'il est possible, dans la boîte de vitesses ou le distributeur, d'enclencher pendant un court instant, l'entraînement de la transmission constituée de l'arbre articulé (16) et du réducteur (9), immédiatement avant de commander le déplacement du piston (18) dans le sens amenant en prise les dentures d'entraînement (2a, 10a).
